# EUROPÄISCHE PATENTSCHRIFT

(11) **EP 3 228 665 B1**
(45) Veröffentlichungstag und Bekanntmachung des Hinweises auf die Patenterteilung: **11.05.2022**
(21) Anmeldenummer: 17152746.8
(22) Anmeldetag: 24.01.2017
(51) Int. Cl.: C08L 61/00, B32B 25/14, B60C 1/00, C08K 3/04, C08K 5/00, C08K 7/00, C08L 15/02, C08L 21/02, F16L 11/00, F16L 11/18

(54) **POLYMERMISCHUNG UND SCHLAUCH, INSBESONDERE LADELUFTSCHLAUCH, ENTHALTEND DIE POLYMERMISCHUNG**
POLYMER MIXTURE AND HOSE, IN PARTICULAR PURPOSE, CONTAINING THE POLYMER MIXTURE
POLYMÈRE ET PIPE FLEXIBLE, EN PARTICULIER PIPE D'AIR FLEXIBLE CONTENANT LE MÉLANGE POLYMÈRE

(30) Priorität: 04.04.2016 DE 102016205557
(43) Veröffentlichungstag der Anmeldung: 11.10.2017
(73) Patentinhaber: ContiTech MGW GmbH, 34346 Hann. Münden (DE)
(72) Erfinder: Vujosevic, Danilo, 30161 Hannover (DE); Seibold, Sebastian, 34346 Hannoversch Münden (DE); Meszynska, Anna, 34346 Hannoversch Münden (DE)
(74) Vertreter: Continental Corporation

(56) Entgegenhaltungen:
- EP-A1- 1 396 670
- WO-A1-2012/080158
- WO-A1-2013/072168
- DE-A1-102013 103 759
- US-A- 5 852 139
- US-A1- 2004 121 853
- THANH TU PHAM ET AL: "Fluoroelastomer-MWNT nanocomposites-1: Dispersion, morphology, physico-mechanical, and thermal properties", POLYMER COMPOSITES, Bd. 30, Nr. 2, 1. Februar 2009 (2009-02-01), Seiten 121-130, XP055109043, ISSN: 0272-8397, DOI: 10.1002/pc.20521

## Beschreibung

Die Erfindung betrifft eine Polymermischung und einen Schlauch, insbesondere einen Ladeluftschlauch, enthaltend die Polymermischung.

Ladeluftschläuche enthalten in der Regel verschiedene Bauteile aus unterschiedlichen Materialien. Zum einen starre Rohre aus Plastik, ebenso wie elastische Kautschukschläuche, die mittels metallischen Ringen und Schellen verbunden werden. Des Weiteren kommen noch zusätzliche Bauteile für die Verbindung mit den Anschlüssen im Fahrzeug, wie z. Bsp. Filter, Luftkühlung, Sensoren, etc. hinzu.

Der elastische und somit flexible Teil ist notwendig, um den verschiedenen Vibrationen, die aus dem Motorraum des Fahrzeugs kommen, standzuhalten.

Die verschiedenen Bauteile müssen jeweils in unterschiedlichen Herstellverfahren produziert und zusammengesetzt werden.

Um diesen Aufwand zu verringern ist es wünschenswert, den gesamten Schlauch, insbesondere den gesamten Ladeluftschlauch, in nur einem Prozess herstellen zu können.

Des Weiteren muss der Ladeluftschlauch nicht nur flexibel, sondern auch eine besonders gute Beständigkeit gegenüber höheren Temperaturen und / oder gegenüber aggressiven Medien, wie z. Bsp. Säuren oder Kraftstoffen, besitzen.

Eine Aufgabe der vorliegenden Erfindung ist es daher, eine Polymermischung bereitzustellen, aus der ein Schlauch, insbesondere eine Ladeluftschlauch, in nur einem Prozess hergestellt werden kann, und der gleichzeitig Temperatur- und Medienbeständig ist.

Gelöst wird diese Aufgabe dadurch, dass die Polymermischung, wenigstens einen Fluorkautschuk und wenigstens einen aktiven Füllstoff und wenigstens einen thermoplastischen Kunststoff enthält.

Die Verwendung von Fluorkautschuk in Kombination mit aktiven Füllstoffen als medienbeständige Innenschicht für mehrschichtige flexible Schläuche ist bereits aus WO 2013/072168 A1 bekannt._Dort wird ein Schlauch beschrieben, der neben der dort erfindungsgemäßen Kautschukmischung als Innenschicht ebenso noch zusätzlich eine Festigkeitsträgerschicht enthalten kann. Diese Festigkeitsträgerschicht ist aus den üblichen Werkstoffen, die dort beschrieben werden, aufgebaut. EP 1 396 670 A1 oder auch DE 10 2013 103 759 A1 offenbaren ebenso wie WO 2013/072168 A1 verschiedene thermoplastische Materialien als Festigkeitsträgerlagen, die jeweils separate Lagen, meist als Gewebe, Gestrick oder textile Garne ausgebildet, in dem Schlauch darstellen.

Die Verwendung von aktiven Füllstoffen, wie beispielsweise Carbon Nano Tubes (CNT) in technischen Kautschukartikeln ist bereits bekannt. In WO 2012/080158 A1 wird zum Beispiel ein sogenannter Masterbatch für CNT, der dann als Mischungsbestandteil, insbesondere für Laufstreifen für Reifen, dient, offenbart. Für Laufstreifen von Reifen werden im Wesentlichen Styrol-Butadien-Kautschuke, Naturkautschuke und Butadien-Kautschuke verwendet.

Überraschenderweise wurde gefunden, dass sich eine Kombination aus wenigstens einem Fluorkautschuk mit aktiven Füllstoffen und wenigstens einem thermoplastischen Kunststoff und wenigstens einem Kompatibilitätsadditiv, wobei das Kompatibilitätsadditiv Glycidylacrylat, Glycidylmethacrylat oder Glycidylethylacrylat ist, besonders gut zur Herstellung von Schläuchen, insbesondere Ladeluftschläuchen, in einem Prozessschritt eignet, ohne Einbußen in den notwendigen physikalischen Eigenschaften hinnehmen zu müssen.

Schläuche, die als einen Bestandteil wenigstens einen thermoplastischen Kunststoff, d.h. einen so genannten Thermoplasten, enthalten, werden häufig auch als Rohre bezeichnet. Ladeluftschläuche werden häufig auch als Ladeluftleitungen bezeichnet, da sie, wie eingangs erwähnt, aus verschiedenen Bauteilen aus unterschiedlichen Materialien aufgebaut sein können. Im Sinne der vorliegenden Erfindung können somit die Begriffe Schlauch und Rohr synonym verwendet werden. Gleiches gilt für die Begriffe Ladeluftschlauch und Ladeluftleitung.

Als Fluorkautschuk können alle der fachkundigen Person bekannten Fluorkautschuke verwendet werden. Ebenso können die Copolymere, wie bespw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE) verwendet werden.

Der Fluorkautschuk kann aus einem oder im Verschnitt mit wenigstens noch einem weiteren Fluorkautschukpolymer, wie bspw. Fluorsilikon, Polytetrafluorethylen (PTFE) oder Perfluorethylenpropylen (FEP), eingesetzt werden.

Die Polymermischung enthält bevorzugt einen oder mehrere Fluorkautschuk(e). Bevorzugt handelt es sich dabei um lediglich einen Fluorkautschuk.

Als thermoplastische Kunststoffe können alle der fachkundigen Person bekannten Thermoplasten verwendet werden. Besonders gut geeignet sind die HochleistungsThermoplaste.

Die Gruppe der Hochleistungsthermoplaste umfasst hierbei sehr verschiedene aromatische Polymere, deren einzelne Familien durch die in der Hauptkette befindliche charakteristische Gruppen gekennzeichnet sind: Polysulfide, Polysulfone, Polyamide, Polyimide und Polyketone. Zu den Hochleistungsthermoplasten werden ebenso das syndiotaktische Poly(styrol) sowie flüssigkristalline Polymere und fluorierte Thermoplaste gezählt. Für die vorliegende Erfindung hat sich die Verwendung von Polysulfiden, insbesondere Polyphenylensulfid (PPS), als besonders gut geeignet gezeigt. Polyphenylensulfid ist auf Grund seiner Wärmeformbeständigkeit bis zu Temperaturen von 200 °C und seiner chemischen Resistenz gegen eine Vielzahl von Lösungsmitteln, Säuren oder Basen besonders bevorzugt.

Ebenso können allerdings Hochleistungsthermoplaste wie bspw. Polyetheretherketon (PEEK), Polyethersulfon (PES), Polyphenylensulfon (PPSU), Polyamidimid (PAI), Polyetherketon (PEK) verwendet werden.

Die thermoplastischen Kunststoffe können alleine oder in Kombination verwendet werden. Bevorzugt ist es, wenn die Polymermischung lediglich einen thermoplastischen Kunststoff enthält.

Die Menge an thermoplastischem Kunststoff in der Polymermischung beträgt bevorzugt von 50 bis 99 php.

Des Weiteren kann die Polymermischung noch weitere Inhaltsstoffe enthalten.

Hierzu zählen unter anderem aktive und inaktive Füllstoffe.

Die fachkundige Person unterscheidet zwischen aktiven Füllstoffen, die die Eigenschaften des Materials aufgrund von Wechselwirkungen mit dem oder den Polymeren, bedingt u.a. durch die reaktive Oberfläche dieser Füllstoffe z.B. durch polare Gruppen, beeinflussen und inaktiven Füllstoffen, die keine Einflüsse auf das Eigenschaftsbild der Polymermischung ausüben und praktisch nur zur Erhöhung des Volumens dienen.

Als aktive Füllstoffe im Rahmen dieser Erfindung können beispielsweise aktive Ruße, Magnesiumcarbonat, aktive gefällte Kieselsäure, pyrogene Kieselsäure, kondensierte Kieselsäure, Calcium- und Aluminiumsilikate, Fasern (Kurz- und Langfasern, Glas-, Kohle-, Aramidfasern), Whisker (Aluminiumoxid, Siliziumcarbid), Glimmer, Zinkoxid, Kern/Mantel-Füllstoffe und weitere eingesetzt sein.

Insbesondere die Verwendung von aktivem Ruß hat sich als vorteilhaft hinsichtlich der Reißeigenschaften gezeigt. Ob ein Ruß als aktiv oder inaktiv bezeichnet wird, hängt im Wesentlichen von seiner spezifischen Oberfläche ab. Als aktiv werden in der Regel alle Ruße bezeichnet, welche einen Iodzahl, gemäß ASTM D 1510, die auch als Iodabsorptionszahl bezeichnet wird, zwischen 60 und 300 g / kg und eine DBP-Zahl, zwischen 60 und 150 cm³ / 100g besitzen. Die DBP-Zahl gemäß ASTM D 2414 bestimmt das spezifische Absorptionsvolumen eines Rußes oder eines hellen Füllstoffes mittels Dibutylphthalat. Dies bedeutet, dass bevorzugt Ruße mit den Serien-Kennungen N-1xx, N-2xx, N-3xx als aktive Ruße bezeichnet und verwendet werden. Die Kennung der Ruße erfolgt gemäß der Klassifizierungstabelle der ASTM D 1765-06.

Die Polymermischung enthält bevorzugt einen oder mehrere Fluorkautschuk(e) und wenigstens einen aktiven Füllstoff in einer Gesamtmenge von 1 bis 50 php, wobei php "part per hundred parts of polymer" bedeutet. Fasern sind von dieser Gesamtmenge ausgenommen.

Ebenso ist es vorteilhaft, wenn die Polymermischung Fasern enthält. Besonders gut geeignet sind Glasfasern in Mengen von 10 bis 40 php. Aufgrund der hohen Bruchdehnung und der elastischen Energieaufnahme der Glasfasern sind sie besonders gut für mechanisch und thermisch beanspruchte Faserverbundanwendungen geeignet.

Andere gut geeignete Fasern sind Karbonfasern und Kohlenstoffnanöröhrchen (Carbo Nano Tubes, CNT).

Die in der Kautschukindustrie eingesetzten Kieselsäuren sind in der Regel gefällte Kieselsäuren, die insbesondere nach ihrer Oberfläche charakterisiert werden. Auch hier ist eine direkte Korrelation zwischen aktiver Kieselsäure und der Oberfläche vorhanden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Werden Kieselsäuren in der Polymermischung verwendet, so haben diese vorzugsweise eine Stickstoff-Oberfläche (BET) zwischen 50 und 400 m²/g und eine CTAB-Oberfläche zwischen 100 und 300 m²/g.

Zu den inaktiven Füllstoffen zählen insbesondere Kreide, Kieselgur, Tonerde-Gel, Asphalt, Hartgummistaub, anorganische und organische Pigmente, Glaskugeln, Kalkstein (CaCO₃), Kieselsäure (inaktiv), Ruß (inaktiv), Holzmehl, Nussschalenmehl, Kaolin, Feldspat und Talkum.

Zusätzlich enthält die Polymermischung erfindungsgemäß wenigstens noch ein Kompatibilitätsadditiv, wobei es sich um Glycidylacrylat, Glycidylmethacrylat, Glycidylethacrylat handelt.. Das Kompatibilitätsadditiv wird in Mengen von 0,1 bis 1 php eingesetzt. Das Additiv soll eine chemische Bindung zwischen dem Elastomer und dem Thermoplast herstellen.

Optional kann in der Polymermischung noch wenigstens ein Kristallisationsadditiv in Mengen von 0 bis 1 php vorhanden sein. Kristallisationsadditive dienen der Verbesserung des Polymerkristallisationsprozesses, der die physikalischen Eigenschaften von Polymermischungen verändert. Insbesondere können die Kristallisationsadditive bei Wiederverwendung von Polymergranulat eingesetzt werden.

Der Kautschukanteil in der Polymermischung enthält kein Vulkanisationssystem. Somit ist es möglich, dass die zunächst als Granulat vorliegende Polymermischung wiederverwendbar bleibt, und dass sich die Polymermischung als eine typische wiederverschmelzbare Thermoplastmischung verhält.

Die Herstellung der erfindungsgemäßen Polymermischung erfolgt bevorzugt derart, dass in einem ersten Verfahrensschritt der Fluorkautschuk mit den weiteren Bestandteilen und aktiven Füllstofen, mit Ausnahme des thermoplastischen Kunststoffs und mit Ausnahme von gegebenenfalls vorhandenen Fasern, bevorzugt Glasfasern, Karbonfasern und / oder CNT, vermischt wird. Dies geschieht bevorzugt in einem üblichen Mischer.

Anschließend wird in wenigstens einem weiteren Verfahrensschritt die so hergestellte Fluorkautschukmischung zu dem thermoplastischen Kunststoff hinzugefügt und somit die Polymermischung erhalten. Gegebenenfalls erfolgt in diesem Verfahrensschritt auch die Zugabe der Fasern, insbesondere der Glasfasern und / oder Karbonfasern und / oder CNT. Somit gelangen die aktiven Füllstoffe indirekt über eine Mischung aus Fluorkautschuk und aktiven Füllstoffen in die erfindungsgemäße Polymermischung.

Aus der erfindungsgemäßen Polymermischung wird dann ein Schlauch, bevorzugt ein Ladeluftschlauch in nur einem einzigen Verfahrensschritt hergestellt. Dies geschieht bevorzugt mittels einem Blasformverfahren oder einem Spritzgussverfahren.

Eine weitere Aufgabe der Erfindung besteht darin, einen Schlauch, insbesondere einen Ladeluftschlauch, bereitzustellen, der in nur einem Prozess hergestellt werden kann und der gleichzeitig Temperatur- und Medienbeständig ist.

Gelöst wird diese Aufgabe dadurch, dass der Schlauch wenigstens aus einer Polymermischung besteht, die wenigstens einen Fluorkautschuk und wenigstens einen aktiven Füllstoff und wenigstens einen thermoplastischen Kunststoff und wenigstens ein Kompatibilitätsadditiv enthält.

Erfindungsgemäß besteht der Schlauch, insbesondere der Ladeluftschlauch, aus der erfindungsgemäßen Polymermischung. Somit wird sichergestellt, dass der gesamte Schlauch tatsächlich in nur einem Prozessschritt und mit nur einer Polymermischung hergestellt werden kann.

Bezüglich der Zusammensetzung der Polymermischung, vor allem hinsichtlich des Fluorkautschuks, der aktiven Füllstoffe, der thermoplastischen Kunststoffe, des Kompatibilitätsadditivs und weiteren Bestandteile, gelten die bereits weiter oben erfolgten Ausführungen zu der erfindungsgemäßen Polymermischung.

Die Erfindung soll nun anhand von Vergleichs- und Ausführungsbeispielen, die in den Tabelle 1 zusammengefasst sind, näher erläutert werden.

Im jeweils oberen Teil der Tabelle 1 ist dabei die Mischungszusammensetzung dargestellt, während jeweils im unteren Teil der Tabelle 1 die dazugehörigen entsprechenden physikalischen Eigenschaften illustriert sind.

Die physikalischen Eigenschaften sind von dem Mischprozess und vor allem von dem jeweils eingesetzten Fluorkautschuk in Kombination mit dem jeweiligen aktiven Füllstoff abhängig, so dass sich über eine Anpassung dieser Mischungsbestandteile die physikalischen Eigenschaften der gesamten Polymermischung steuern lassen.

**Tabelle 1**

| | **Reine Thermoplastische Zusammensetzung** | **Erfindungsgemäße Polymermischung** |
|---|---|---|
| PPS | 100 php | 80 php |
| Glasfasern | 15 php | 15 php |
| Bindemittel für Glasfasern | 0,5 php | 0,5 php |
| Kompatibilitätsadditiv | 0 php | 0,4 php |
| Kristallisationsadditiv | 0 php | 0,1 php |
| Fluorkautschuk mit aktivem Füllstoff (ohne Vulka.-System) | 0 php | 20 php |

| **Physikalische Eigenschaften normiert auf die reine Thermoplastische Zusammensetzung** | | |
|---|---|---|
| Zugfestigkeit | 100% | 80% |
| Reißdehnung | 100% | 120% |
| Elastizitätsmodul | 100% | 120% |

## Patentansprüche

1. Polymermischung, **dadurch gekennzeichnet, dass** sie wenigstens einen Fluorkautschuk und wenigstens einen aktiven Füllstoff und wenigstens einen thermoplastischen Kunststoff und wenigstens ein Kompatibilitätsadditiv enthält, wobei das Kompatibilitätsadditiv Glycidylacrylat, Glycidylmethacrylat oder Glycidylethylacrylat ist.

2. Polymermischung nach Anspruch 1, **dadurch gekennzeichnet, dass** sie zusammen 1 bis 50 php wenigstens eines Fluorkautschuks und wenigstens eines aktiven Füllstoffs enthält.

3. Polymermischung nach Anspruch 1 oder 2, **dadurch gekennzeichnet, dass** sie 50 bis 99 php wenigstens eines thermoplastischen Kunststoffs enthält.

4. Polymermischung nach einem der Ansprüche 1 bis 3, **dadurch gekennzeichnet, dass** der thermoplastische Kunststoff Polyphenylensulfid ist.

5. Polymermischung nach einem der Ansprüche 1 bis 4, **dadurch gekennzeichnet, dass** sie zusätzlich Glasfasern und / oder Karbonfasern und / oder CNT enthält.

6. Schlauch, **dadurch gekennzeichnet, dass** er aus wenigstens einer Polymermischung enthaltend wenigstens einen Fluorkautschuk und wenigstens einen aktiven Füllstoff und wenigstens einen thermoplastischen Kunststoff und wenigstens ein Kompatibilitätsadditiv besteht.

7. Schlauch, **dadurch gekennzeichnet, dass** er ein Ladeluftschlauch ist.

## Claims

1. Polymer mixture, **characterized in that** it contains at least one fluororubber and at least one active filler and at least one thermoplastic and at least one compatibility additive, wherein the compatibility additive is glycidyl acrylate, glycidyl methacrylate or glycidyl ethylacrylate.

2. Polymer mixture according to Claim 1, **characterized in that** it contains altogether 1 to 50 php of at least one fluororubber and at least one active filler.

3. Polymer mixture according to Claim 1 or 2, **characterized in that** it contains 50 to 99 php of at least one thermoplastic.

4. Polymer mixture according to any of Claims 1 to 3, **characterized in that** the thermoplastic is polyphenylene sulfide.

5. Polymer mixture according to any of Claims 1 to 4, **characterized in that** it additionally contains glass fibers and/or carbon fibers and/or CNT.

6. Hose, **characterized in that** it is made of at least one polymer mixture containing at least one fluororubber and at least one active filler and at least one thermoplastic and at least one compatibility additive.

7. Hose, **characterized in that** it is a charge air hose.

## Revendications

1. Mélange de polymères, **caractérisé en ce qu'**il contient au moins un caoutchouc au fluor et au moins une charge active et au moins une matière plastique thermoplastique et au moins un additif de compatibilité, l'additif de compatibilité étant l'acrylate de glycidyle, le méthacrylate de glycidyle ou l'acrylate de glycidyléthyle.

2. Mélange de polymères selon la revendication 1, **caractérisé en ce que** qu'il contient ensemble 1 à 50 php d'au moins un caoutchouc au fluor et d'au moins une charge active.

3. Mélange de polymères selon la revendication 1 ou 2, **caractérisé en ce qu'**il contient 50 à 99 php d'au moins une matière plastique thermoplastique.

4. Mélange de polymères selon l'une quelconque des revendications 1 à 3, **caractérisé en ce que** la matière plastique thermoplastique est un poly(sulfure de phénylène).

5. Mélange de polymères selon l'une quelconque des revendications 1 à 4, **caractérisé en ce qu'**il contient de plus des fibres de verre et/ou des fibres de carbone et/ou CNT.

6. Tube, **caractérisé en ce qu'**il est constitué d'au moins un mélange de polymère contenant au moins un caoutchouc au fluor et au moins une charge active et au moins une matière plastique thermoplastique et au moins un additif de compatibilité.

7. Tube, **caractérisé en ce qu'**il est un tuyau d'admission d'air de suralimentation.
